# NEUE EUROPÄISCHE PATENTSCHRIFT

(11) **EP 2 722 260 B2**
(45) Veröffentlichungstag und Bekanntmachung des Hinweises auf die Entscheidung über den Einspruch: **27.07.2022**
(45) Hinweis auf die Patenterteilung: 08.07.2015
(21) Anmeldenummer: 13188242.5
(22) Anmeldetag: 11.10.2013
(51) Int. Cl.: B60L 3/00, B60L 3/04, B60L 11/18, B60L 15/20, B62D 59/04

(54) **Rangierantrieb mit intelligenter Zentraleinheit**
Manoeuvring drive with intelligent central unit
Entraînement de manoeuvre doté d'une unité centrale intelligente

(30) Priorität: 22.10.2012 DE 202012010078 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jochen, 85665 Moosach (DE); Schmid, Tobias, 85435 Erding (DE); Müssler, Klaus, 85235 Egenburg (DE); Fernandez, Ana María, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE)
(74) Vertreter: Prinz & Partner mbB

(56) Entgegenhaltungen:
- EP-A1- 1 886 905
- EP-A1- 2 138 387
- EP-A1- 2 360 543
- EP-A1- 2 409 903
- EP-A1- 2 669 153
- EP-A2- 1 387 482
- DE-U1-202009 005 524
- DE-U1-202010 008 600
- "elektrische Welle", Wikipedia, 6 April 2016 (2016-04-06),
- "Synchronregler B3", Fachblatt ATR Industrie- Elektronik,

## Beschreibung

Die Erfindung betrifft einen Rangierantrieb für einen Anhänger.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Wenn der Anhänger rangiert werden soll, kann ein Bediener beispielsweise über eine Fernsteuerung die Antriebsmotoren des Rangierantriebs ansteuern. Aus der EP 1 886 905 A1 ist ein derartiger Rangierantrieb gemäß dem Oberbegriff des Anspruchs 1 bekannt. Im einfachen Fall eines Anhängers mit einer Achse und somit zwei Rädern weist der Rangierantrieb zwei Motoren auf, die sich, wenn der Anhänger geradeaus verfahren werden soll, mit derselben Drehzahl drehen sollten. Allerdings gibt es in der Praxis häufig Drehzahlunterschiede, die beispielsweise aus Unterschieden im Untergrund (asphaltierter Weg auf einer Seite des Anhängers, Sand auf der anderen Seite) und sich daraus ergebenden unterschiedlichen Rollwiderständen oder auch aus geringfügigen Leistungsunterschieden der Antriebseinheiten des Rangierantriebs resultieren. In diesem Fall fährt der Anhänger tatsächlich eine Kurve, da das mit der höheren Geschwindigkeit angetriebene Rad des Wohnwagens dem langsameren Rad vorauseilt. Der Bediener muss dann manuell korrigieren, sodass anstelle einer Geradeausfahrt tatsächlich häufig eine Schlangenlinie gefahren wird, die sich iterativ dem gewünschten Verfahrweg annähert.

Die Aufgabe der Erfindung besteht darin, einen Rangierantrieb für einen Anhänger zu schaffen, mit dem ein Bediener beim Rangieren des Anhängers unterstützt wird und es leichter möglich ist, den gewünschten Verfahrweg auch einzuhalten.

Zur Lösung dieser Aufgabe ist erfindungsgemäß ein Rangierantrieb mit den Merkmalen des Anspruchs 1 vorgesehen. Die Erfindung beruht auf dem Grundgedanken, dass die Antriebseinheiten der Zentraleinheit zumindest dann, wenn die von ihr vorgegebenen Antriebsleistungen nicht erfüllt werden können, eine Rückmeldung geben. Dies ermöglicht der Zentraleinheit, die Antriebsvorgaben insgesamt so anzupassen, dass der gewünschte Rangierbetrieb möglichst gut erreicht wird. In einem einfachen Beispiel wird angenommen, dass die Zentraleinheit bei Geradeausfahrt eine Drehzahl für die Antriebsmotoren von 1000 U/min vorgibt. In einem Beispiel mit zwei Antriebseinheiten schafft einer der beiden Antriebsmotoren der Antriebseinheit diese Drehzahlvorgabe, während der andere nur eine Drehzahl von 900 U/min erreicht. Die Rückmeldung kann nun darin bestehen, dass diese Antriebseinheit an die Zentraleinheit zurückmeldet, dass eine vordefinierte Stromgrenze erreicht wurde, bevor die gewünschten 1000 U/min erreicht wurden. Die Zentraleinheit kann gleichzeitig abfragen, welche Drehzahl die "langsamere" Antriebseinheit erreichen kann; in diesem Beispiel lediglich 900 U/min. Auf der Basis dieser Information kann die Zentraleinheit die Antriebsvorgabe des "schnelleren" Antriebsmotors auf 900 U/min zurücksetzen oder vorzugsweise auf einen etwas geringeren Wert, der einen gewissen Abstand von der maximal erreichbaren Drehzahl der "langsameren" Antriebseinheit aufweist Dadurch ist gewährleistet, dass der Anhänger geradeaus verfahren wird und nicht, wie dies bei einem herkömmlichen System aufgrund der Drehzahldifferenz zwischen den beiden Antriebseinheiten der Fall wäre, entlang einer Kurve. Allgemein ausgedrückt kann die Zentraleinheit aufgrund der Rückmeldung der Antriebseinheiten auf das "schwächste Glied der Kette" im Antrieb Rücksicht nehmen, sodass sich eventuelle Unterschiede nicht auf den Fahrbetrieb des Anhängers auswirken.

Als Leistungsreduktion im Sinne des Anspruchs 1 wird dabei eine Rückmeldung an die Zentraleinheit verstanden, welche reduzierte Leistung anstelle der Leistung, die von der Zentraleinheit tatsächlich vorgegeben ist, von der entsprechenden Antriebseinheit erreicht werden kann. Es erfolgt also nicht nur eine Rückmeldung, dass die vorgegebene Leistung nicht möglich ist, sondern eine konkrete Angabe der maximal von der entsprechenden Antriebseinheit erzielbaren Leistung.

Eine Leistungsreduktion kann dadurch ausgelöst werden, dass eine Grenztemperatur in der Antriebseinheit überschritten wird. In einem solchen Fall meldet die Antriebseinheit an die Zentraleinheit zurück, dass nur noch eine verminderte Leistung bereitgestellt wird, um einen weiteren Temperaturanstieg zu verhindern.

Die Leistungsreduktion kann auch dadurch ausgelöst werden, dass eine von der Zentraleinheit vorgegebene Solldrehzahl nicht erreicht wird. In diesem Fall meldet die Antriebseinheit entsprechend dem oben skizzierten Beispiel konkret zurück, welche Drehzahl bereitgestellt werden kann.

Die Leistungsreduktion kann auch dadurch ausgelöst werden, dass bei der Versorgung einer Antriebseinheit eine Stromgrenze erreicht wird, bevor der entsprechende Antriebsmotor seine Solldrehzahl erreicht hat.

Alternativ zum Parameter der Drehzahl des Antriebsmotors der Antriebseinrichtung kann auch das Drehmoment herangezogen werden. Da jedoch eine Drehmomentmessung in den Antriebseinheiten meist mit einem höheren Aufwand verbunden ist als die Bestimmung der Drehzahl der Antriebsmotoren, wird in der Praxis üblicherweise auf die Drehzahl der Antriebsmotoren abgestellt werden.

Eine Leistungsreduktion kann auch vom Überschreiten eines Grenzwertes der anliegenden Spannung und/oder des fließenden Stroms ausgelöst werden, um die Antriebsmotoren der Antriebseinheiten zu schützen oder auf den maximal von einer Energiequelle verfügbaren Strom Rücksicht zu nehmen.

Gemäß einer Ausgestaltung der Erfindung ist vorgesehen, dass die Zentraleinheit die Winkelposition der Motorwelle der Antriebseinheiten synchronisiert. Auf diese Weise wird auf elektronischem Wege eine "starre" Welle zwischen den Antriebseinheiten und damit den Rädern auf den beiden Seiten des Anhängers geschaffen, sodass bei Geradeausfahrt gewährleistet werden kann, dass die Räder des Anhängers mit exakt derselben Geschwindigkeit angetrieben werden. Unter der Annahme, dass kein Schlupf zwischen den Rädern des Anhängers und dem Untergrund auftritt, ist dadurch gewährleistet, dass der Anhänger exakt geradeaus verfahren werden kann.

Gemäß einer bevorzugten Ausführungsform der Erfindung ist vorgesehen, dass die Zentraleinheit bei Kurvenfahrt die Antriebsvorgabe für die Antriebseinheit(en) auf der Kurveninnenseite unter Berücksichtigung der Rückmeldung der Antriebseinheit(en) auf der Kurvenaußenseite vornimmt. Dadurch ist gewährleistet, dass auch bei Kurvenfahrt die von der Zentraleinheit gemachten Antriebsvorgaben auch von den Antriebseinheiten erfüllt werden können. Wird beispielsweise eine Kurvenfahrt vorgegeben, die von der kurvenäußeren Antriebseinheit 1100 U/min und von der kurveninneren Antriebseinheit 900 U/min erfordert, während die äußere Antriebseinheit zurückmeldet, dass die Maximaldrehzahl bei 1000 U/min liegt, wird von der Zentraleinheit die Antriebsvorgabe für die kurveninnere Antriebseinheit proportional heruntergesetzt, sodass der gewünschte Kurvenradius beibehalten wird. Die Zentraleinheit wirkt hier als elektronisches Differenzial, welches aktiv die für eine gewünschte Kurvenfahrt nötigen Drehzahldifferenzen an den Rädern des Anhängers erzeugt.

Gemäß einer Weiterbildung der Erfindung ist ein Sensor vorgesehen, welcher der Zentraleinheit ein Signal liefert, das im Hinblick auf Abweichungen des Anhängers von einer vorgegebenen Fahrtrichtung ausgewertet werden kann. Bei dem Sensor kann es sich insbesondere um einen Beschleunigungssensor oder Drehratensensor handeln, mit dem insbesondere Gierbewegungen des Anhängers unmittelbar erkannt werden können. Wenn beispielsweise von der Zentraleinheit eine Geradeausfahrt gesteuert, jedoch eine Gierbewegung erfasst wird, beispielsweise weil ein Rad des Anhängers eine Bodenunebenheit durchfährt, kann die Zentraleinheit gegensteuern und durch geeignete, unterschiedliche Antriebsvorgaben für die Antriebseinheiten gewährleisten, dass der Anhänger dennoch entlang einer geraden Linie verfahren wird.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb;
- Figur 2 in einer schematischen Draufsicht den Anhänger von Figur 1; und
- Figur 3 schematisch in einem Flussdiagramm die Ansteuerung der Antriebseinheiten durch die Zentraleinheit.

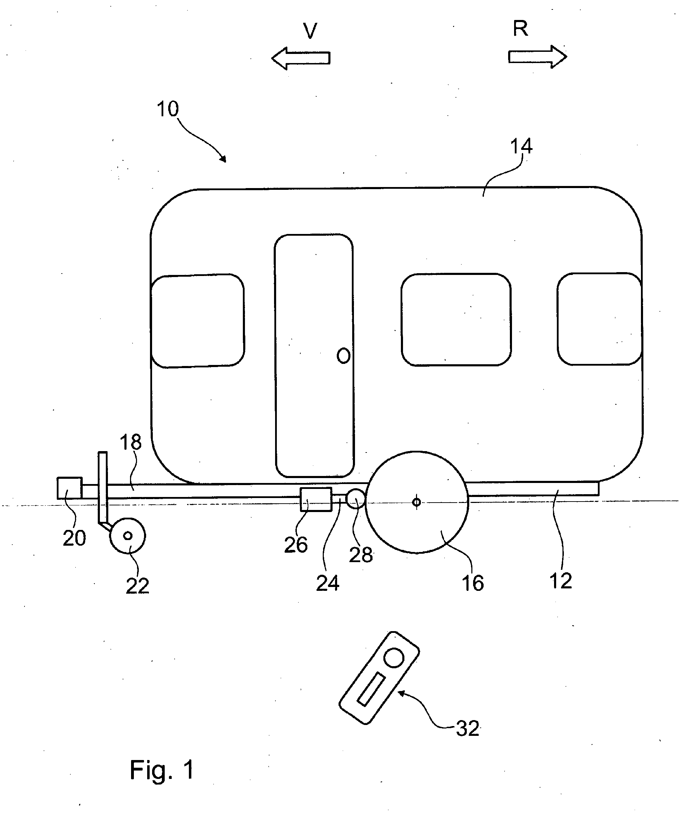

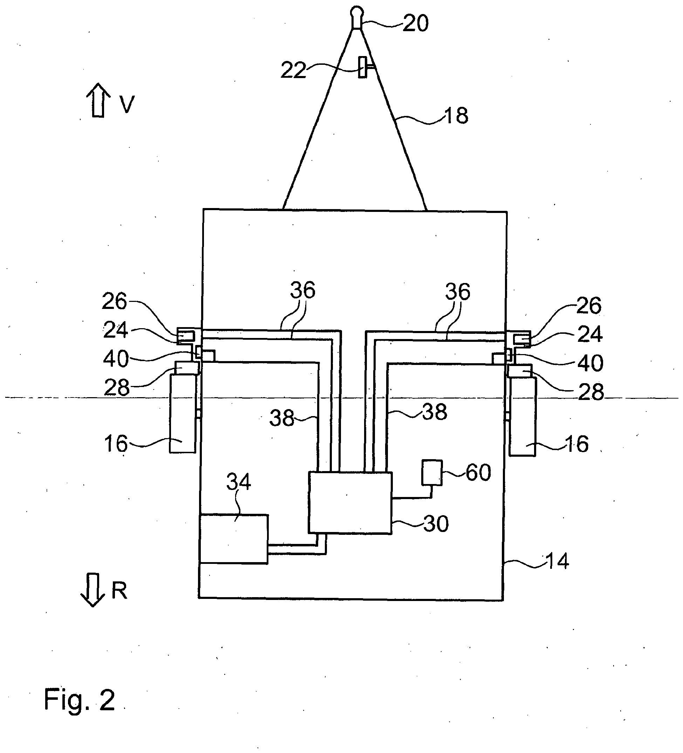

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Anstriebsmotor 26 angetrieben werden kann. Die Antriebsrolle 28 kann mit dem zugeordneten Rad 16 des Anhängers 10 in Eingriff gebracht werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich derselbe Rangierantrieb kann auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

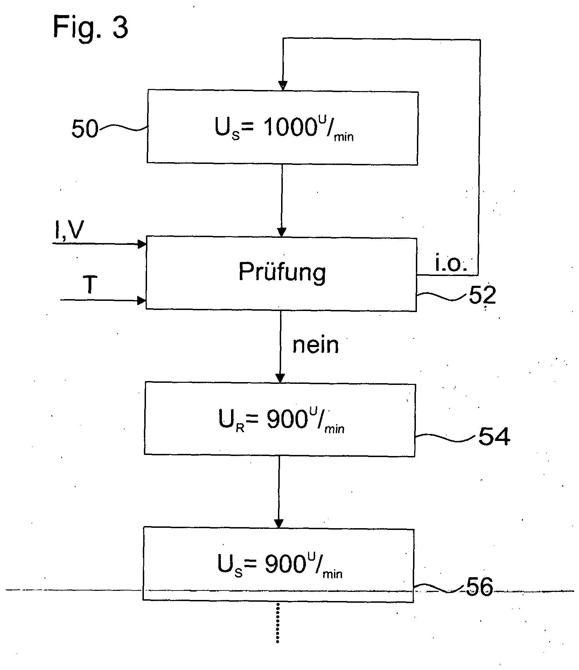

Erfindungsgemäß ist jede Antriebseinheit 24 mit einem Überprüfungsmodul 40 versehen, mit dem jede Antriebseinheit 24 für sich individuell überprüfen kann, ob die von der Zentraleinheit gemachten Antriebsvorgaben eingehalten werden können. Dies ist in Figur 3 schematisch gezeigt. Im Feld 50 ist dargestellt, dass die Zentraleinheit 30 an die Antriebseinheiten 24 eine Solldrehzahl für die Antriebsmotoren von 1000 U/min vorgibt, um beispielsweise den Wohnwagen geradeaus und vorwärts (siehe die Pfeile V in den Figuren 1 und 2) zu verfahren. Im Überprüfungsmodul 40 überprüft dabei jede Antriebseinheit 24 individuell, ob diese Antriebsvorgabe erfüllt werden kann (siehe Feld 52 in Figur 3).

Die Überprüfung muss nicht auf die tatsächlich erreichbare Drehzahl der Antriebseinheiten abstellen, sondern kann auch darauf abstellen, ob bei Berücksichtigung einer vorgegebenen Stromgrenze eine Solldrehzahl erreicht wird. In diesem Fall wird der dem Antriebsmotor 26 zugeführte Strom erhöht, bis die Solldrehzahl erreicht ist. Wird vor Erreichen der Solldrehzahl allerdings die Stromgrenze erreicht, also beispielsweise der maximal von der Batterie zur Verfügung stehende Strom, erfolgt eine Rückmeldung an das Überprüfungsmodul 40, dass die Stromgrenze erreicht wurde, bevor der Antriebsmotor 26 die Solldrehzahl erreicht hat.

Die Überprüfung kann auch weitere Parameter wie beispielsweise die Temperatur in der Antriebseinheit berücksichtigen.

Wenn die Antriebsvorgaben erfüllt werden können, erfolgt entweder keine Rückmeldung an die Zentraleinheit 30 oder eine Bestätigung. In diesem Fall wird die Überprüfung in regelmäßigen Abständen als Schleife wiederholt.

Wenn die Antriebsvorgaben jedoch nicht erfüllt werden können, erfolgt über einen Rückmeldekanal (entweder die Steuerleitung 38 oder einen anderen Kommunikationskanal zwischen der Antriebseinheit 24 und der Zentraleinheit 30) eine Rückmeldung, welche Antriebsvorgabe erfüllt werden kann. Im Feld 54 ist hier beispielhaft die Rückmeldung dargestellt, dass eine realistische Drehzahl von 900 U/min erfüllt werden kann.

Wenn eine der Antriebseinheiten 24 zurückmeldet, dass die Antriebsvorgaben nicht erfüllt werden können, wird die Zentraleinheit geänderte Antriebsvorgaben errechnen und an die Antriebseinheiten schicken. Im Beispielfall von Figur 3 wird sie also, um die gewünschte Geradeausfahrt des Anhängers zu gewährleisten, eine generelle Antriebsvorgabe von 900 U/min machen (siehe Feld 56), sodass sich die Antriebsmotoren 26 beider Antriebseinheiten 24 mit derselben Drehzahl drehen können. Es kann auch eine neue Antriebsvorgabe gemacht werden, die etwas unterhalb der aktuell erzielbaren Maximalgeschwindigkeit der "langsameren" Antriebseinheit liegt. Dies gewährleistet, dass die Antriebsvorgabe nicht erneut zurückgenommen werden muss, falls die "langsamere" Antriebseinheit in ihrer Umdrehungsgeschwindigkeit auch nur geringfügig absinkt. Beispielsweise kann die neue Antriebsvorgabe einen "Abstand" von 300 U/min oder 500 U/min einhalten.

Über die Berücksichtigung der aktuellen individuellen Leistungsfähigkeit der Antriebseinheiten 24 hinaus kann die Zentraleinheit 30 weitere Funktionen verwirklichen, mit denen die tatsächliche Fahrbewegung des Anhängers 10 möglichst präzise an den vorgegebenen, gewünschten Fahrweg angepasst werden kann. Es kann ein Sensor 60 in der Form eines Beschleunigungssensors oder Drehratensensors vorgesehen sein, mit dem der Zentraleinheit 30 unmittelbar Informationen über Gierbewegungen des Anhängers 10 geliefert werden können. Diese Informationen können von der Zentraleinheit 30 mit den Gierbewegungen abgeglichen werden, die aufgrund der gemachten Antriebsvorgaben zu erwarten sind. Wenn beispielsweise eine Geradeausfahrt vorgegeben wird, ist keine Gierbewegung zu erwarten. Wenn dennoch eine Gierbewegung auftritt, kann die Zentraleinheit 30 "gegensteuern", sodass ein gerader Verfahrweg erzielt wird.

Eine weitere Möglichkeit für die Zentraleinheit, eine möglichst hohe Übereinstimmung zwischen einem vorgegebenen Verfahrweg und dem tatsächlichen Verfahrweg sicherzustellen, besteht darin, die Absolutdrehung der Antriebsmotoren 26 zu vergleichen und gegebenenfalls zu synchronisieren. Bei beispielsweise einer Geradeausfahrt sollten die Antriebsmotoren über einen vorbestimmten Zeitraum dieselbe Anzahl von Umdrehungen machen. Dies kann von der Zentraleinheit 30 überwacht und gegebenenfalls sichergestellt werden. Bei einer vorbestimmten Kurvenfahrt lässt sich aufgrund des gewünschten Kurvenradius und des bekannten Abstands der beiden Räder 16 voneinander errechnen, welche Differenz an Umdrehungen der Antriebsmotoren 26 nötig ist, um den Anhänger 10 eine vorbestimmte Strecke entlang dem vorgegebenen Radius fahren zu lassen. Auch hier kann die Zentraleinheit 30 gewährleisten, dass die gewünschte Differenz an Umdrehungen gleichmäßig über den Verfahrweg aufgebaut wird.

## Patentansprüche

1. Rangierantrieb (24, 30) für einen Anhänger (10), mit einer Zentraleinheit (30), mindestens zwei Antriebseinheiten (24), mit denen Räder (16) des Anhängers (10) angetrieben werden können und die von der Zentraleinheit (30) angesteuert werden, wobei jede Antriebseinheit (24) ein Überprüfungsmodul (40) aufweist, mit dem Antriebsvorgaben der Zentraleinheit (30) dahingehend überprüft werden können, ob sie erfüllt werden können, und wobei ein Rückmeldekanal vorgesehen ist, mit dem die Antriebseinheiten (24) an die Zentraleinheit (30) zurückmelden können, wenn die Antriebsvorgaben nicht erfüllbar sind, wobei die Rückmeldung der Antriebseinheiten (24) in einer Leistungsreduktion besteht.

2. Rangierantrieb nach Anspruch 1, **dadurch gekennzeichnet, dass** die Leistungsreduktion vom Überschreiten einer Grenztemperatur in der Antriebseinheit (24) ausgelöst wird.

3. Rangierantrieb nach Anspruch 1 oder Anspruch 2, **dadurch gekennzeichnet, dass** die Leistungsreduktion vom Nichterreichen einer Solldrehzahl ausgelöst wird.

4. Rangierantrieb nach einem der Ansprüche 1 bis 3, **dadurch gekennzeichnet, dass** die Leistungsreduktion vom Nichterreichen eines Solldrehmoments ausgelöst wird.

5. Rangierantrieb nach einem der Ansprüche 1 bis 4, **dadurch gekennzeichnet, dass** die Leistungsreduktion vom Erreichen eines Grenzwertes der anliegenden Spannung und/oder des fließenden Stroms ausgelöst wird.

6. Rangierantrieb nach einem der vorhergehenden Ansprüche, **dadurch gekennzeichnet, dass** die Zentraleinheit (30) die Winkelposition der Motorwelle der Antriebseinheiten (24) synchronisiert.

7. Rangierantrieb nach einem der vorhergehenden Ansprüche, **dadurch gekennzeichnet, dass** die Zentraleinheit (30) bei Kurvenfahrt die Steuervorgabe für die Antriebseinheit(en) (24) auf der Kurveninnenseite unter Berücksichtigung der Rückmeldung der Antriebseinheit(en) (24) auf der Kurvenaußenseite vornimmt.

8. Rangierantrieb nach einem der vorhergehenden Ansprüche, **dadurch gekennzeichnet, dass** ein Sensor (60) vorgesehen ist, welcher der Zentraleinheit (30) ein Signal liefert, das im Hinblick auf Abweichungen des Anhängers (10) von einer vorgegebenen Fahrtrichtung ausgewertet werden kann.

9. Rangierantrieb nach Anspruch 8, **dadurch gekennzeichnet, dass** der Sensor ein Beschleunigungssensor (60) ist.

10. Rangierantrieb nach Anspruch 8, **dadurch gekennzeichnet, dass** der Sensor ein Drehratensensor (60) ist.

## Claims

1. A maneuvering drive (24, 30) for a trailer (10), comprising a central unit (30), at least two drive units (24) by which wheels (16) of the trailer (10) can be driven and which are controlled by the central unit (30), wherein each drive unit (24) includes a checking module (40) by which drive specifications of the central unit (30) can be checked as to whether they can be fulfilled, and a feedback channel being provided by which the drive units (24) can feed back to the central unit (30) if the drive specifications cannot be fulfilled, wherein the feedback of the drive units (24) consists in a power reduction.

2. The maneuvering drive according to claim 1, **characterized in that** the power reduction is triggered by a limit temperature in the drive unit (24) being exceeded.

3. The maneuvering drive according to claim 1 or claim 2, **characterized in that** the power reduction is triggered by a desired speed being fallen short of.

4. The maneuvering drive according to any of claims 1 to 3, **characterized in that** the power reduction is triggered by a desired torque being fallen short of.

5. The maneuvering drive according to any of claims 1 to 4, **characterized in that** the power reduction is triggered by a limit value of the voltage applied and/or of the current flowing being reached.

6. The maneuvering drive according to any of the preceding claims, **characterized in that** the central unit (30) synchronizes the angular positions of the motor shafts of the drive units (24).

7. The maneuvering drive according to any of the preceding claims, **characterized in that** when cornering, the central unit (30) makes the control specification for the drive unit(s) (24) on the inside of the bend taking into account the feedback of the drive unit(s) (24) on the outside of the bend.

8. The maneuvering drive according to any of the preceding claims, **characterized in that** a sensor (60) is provided which supplies a signal to the central unit (30) which can be evaluated with regard to deviations of the trailer (10) from a specified direction of travel.

9. The maneuvering drive according to claim 8, **characterized in that** the sensor is an acceleration sensor (60).

10. The maneuvering drive according to claim 8, **characterized in that** the sensor is an angular rate sensor (60).

## Revendications

1. Entraînement de manoeuvre (24, 30) pour remorque (10), comportant une unité centrale (30), au moins deux unités d'entraînement (24) au moyen desquelles des roues (16) de la remorque (10) peuvent être entraînées et qui sont pilotées par l'unité centrale (30), chaque unité d'entraînement (24) présentant un module de vérification (40) au moyen duquel des consignes d'entraînement de l'unité centrale (30) peuvent être vérifiées pour savoir si elles peuvent être réalisées, et un canal de retour étant prévu, au moyen duquel les unités d'entraînement (24) peuvent répondre à l'unité centrale (30) lorsque les consignes d'entraînement ne sont pas réalisables, la réponse des unités d'entraînement (24) consistant en une réduction de puissance.

2. Entraînement de manoeuvre selon la revendication 1, **caractérisé en ce que** la réduction de puissance est déclenchée par le dépassement d'une température limite dans l'unité d'entraînement (24).

3. Entraînement de manoeuvre selon la revendication 1 ou la revendication 2, **caractérisé en ce que** la réduction de puissance est déclenchée par le fait qu'un régime de consigne n'est pas atteint.

4. Entraînement de manoeuvre selon l'une des revendications 1 à 3, **caractérisé en ce que** la réduction de puissance est déclenchée par le fait qu'un couple de consigne n'est pas atteint.

5. Entraînement de manoeuvre selon l'une des revendications 1 à 4, **caractérisé en ce que** la réduction de puissance est déclenchée par l'obtention d'une valeur limite de la tension appliquée et/ou du courant circulant.

6. Entraînement de manoeuvre selon l'une des revendications précédentes, **caractérisé en ce que** l'unité centrale (30) synchronise la position angulaire de l'arbre du moteur des unités d'entraînement (24).

7. Entraînement de manoeuvre selon l'une des revendications précédentes, **caractérisé en ce que** lors d'un virage, l'unité centrale (30) réalise la consigne de commande pour l'unité/les unités d'entraînement (24) du côté intérieur du virage en tenant compte de la réponse de l'unité/des unités d'entraînement (24) du côté extérieur du virage.

8. Entraînement de manoeuvre selon l'une des revendications précédentes, **caractérisé en ce qu'**il est prévu un capteur (60) qui fournit un signal à l'unité centrale (30), lequel peut être évalué quant à des déviations de la remorque (10) par rapport à un sens de marche prédéterminé.

9. Entraînement de manoeuvre selon la revendication 8, **caractérisé en ce que** le capteur est un capteur d'accélération (60).

10. Entraînement de manoeuvre selon la revendication 8, **caractérisé en ce que** le capteur est un capteur de vitesse de rotation (60).
